Europäisches Patentamt

(19) European Patent Office

Office européen des brevets

(11) EP 0 568 159 B1

## (12) EUROPEAN PATENT SPECIFICATION

(45) Date of publication and mention
of the grant of the patent:
**02.07.1997 Bulletin 1997/27**

(51) Int. Cl.$^6$: **C02F 5/02**, F28D 13/00

(21) Application number: **93201227.1**

(22) Date of filing: **28.04.1993**

(54) **Apparatus and method for treating water**

Apparat und Verfahren zur Wasserbehandlung

Appareil et procédé pour le traitement de l'eau

(84) Designated Contracting States:
**BE DE FR GB NL**

(30) Priority: **28.04.1992 NL 9200778**

(43) Date of publication of application:
**03.11.1993 Bulletin 1993/44**

(73) Proprietor: **IF TECHNOLOGY B.V.
NL-6814 EA Arnhem (NL)**

(72) Inventor: **Willemsen, August
6843 XM Arnhem (NL)**

(74) Representative: **Land, Addick Adrianus Gosling
Arnold & Siedsma,
Advocaten en Octrooigemachtigden,
Sweelinckplein 1
2517 GK Den Haag (NL)**

(56) References cited:
| | |
|---|---|
| NL-A- 8 800 138 | US-A- 3 896 005 |
| US-A- 4 877 536 | US-A- 4 931 187 |

- **DATABASE WPIL Section Ch, Week 8849,
Derwent Publications Ltd., London, GB; Class
D15, AN 88-351089**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.14.8/3.4

## Description

Apparatus and methods for treating water wherein use is made of a fluidized bed of granular material such as sand are known, for instance from the Netherlands publications 7703939, 8103120 and 8800138, in particular for decalcifying water. Such apparatus and methods are now applied on a large scale for the drinking water supply in the Netherlands and elsewhere.

It has been found from tests that in such known apparatus and methods the problem can occur that spontaneous or homogeneous nucleation can occur of for instance Vaterite and that such so-called microcrystals are still present in the treated water for discharging.

The present invention provides a apparatus for treating water, comprising:

- a reactor vessel provided with a connection for feeding untreated water and a connection for discharging at least partially treated water;
- a bed of granular material in the reactor vessel that is fluidized by the water flow;
- precipitating means for causing calcium ($CaCO_3$) to precipitate onto the granular material; and
- limiting means for holding the saturation index (SI) of the calcium below a predetermined limit value. SI is defined as

$$SI = \frac{[Ca].[CO_3]}{K}$$

wherein K is the solubility product of $CaCO_3$.

The present invention further provides a method which prevents calcium crystals occurring to such an extent after leaving the reactor that further treatment of the water causes problems.

It is important that when calcium occurs it can precipitate directly onto the fluidized bed.

The precipitating means may comprise means for adding alkali - see above mentioned publications NL-A-7703939 and NL-A-8103120 - but preferably comprise heating means in accordance with the publication NL-A-8800138. Even in the case of slow heating which takes place over the whole length of the reactor vessel the above mentioned spontaneous nucleation may occur - likewise along the whole length of the reactor vessel - and have a disturbing effect. In this process the saturation index is preferably held under logarithm (base number 10) SI = 0.5-0.7 for calcite and the heating takes place as gradually as possible over the whole length of the reactor vessel.

In preference the limiting means comprise a filter for filtering dissolved organic carbon (DOC) out of the untreated water, as the growth of calcium on the granules is inhibited by this DOC, while the spontaneous formation of $CaCO_3$ (e.g. Vaterite) is influenced hardly or not at all hereby.

Provision is preferably further made for precipitation of (ortho)phosphate, as this phosphate has an inhibiting effect on the growth of calcium on the granules.

The granular material is preferably preprocessed such that it has a great affinity for calcium, for instance by using sand which has already had calcium grown thereon, whereby attrition (abrasion) of calcium from the granules is decreased, but growth does occur. The reactive surface of calcium is also enlarged herewith such that the growth speed is so large as to prevent the logarithm (SI) rising above the critical value.

Another aspect of the present invention relates to a cooling circuit, comprising :

- a cooling tower; and
- an apparatus for treating water connected to said cooling tower and including:
- a reactor vessel provided with a connection for feeding untreated water and a connection for discharging at least partially treated water;
- a bed of granular material in the reactor vessel that is fluidised by the water flow;
- heating means for causing salt showing a decreasing solubility with increasing temperature, to be precipitated onto the granular material.

Such cooling circuit provides for further thickening of the water in the cooling tower, where water is evaporated for cooling purposes. Therefore the amount of supplation water for maintaining the cooling circuit can be achieved.

Further advantages, features and details of the present invention are clearified in the light of a description of preferred embodiment with reference to the annexed drawing, in which are shown:

fig. 1 a sideview of a preferred embodiment of an apparatus according to the present invention, in which a preferred embodiment according to the present invention is employed; and

fig. 2 a schematic view of a preferred embodiment of a cooling circuit according to the present invention.

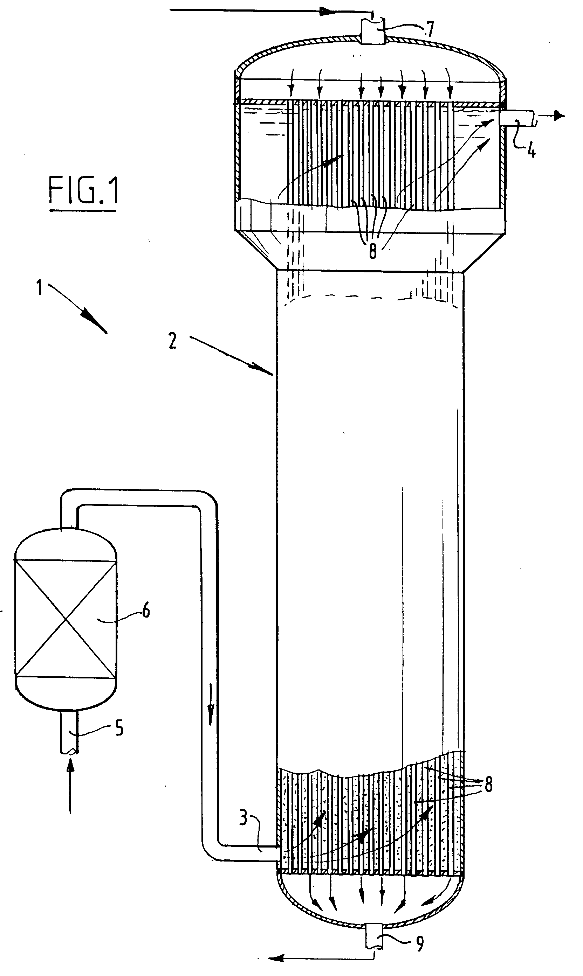

An apparatus (fig. 1) 1 comprises a reactor vessel 2 provided with a feed connection 3 for feeding untreated (hard) water at 5-50°C and preferably 10-20°C, a discharge connection 4 for draining treated (softened) water at 50-150°C and preferably 60-100°C. Arranged in the reactor vessel in a manner not shown is a fluidized bed of granular material such as sand which is preferably already provided with some calcium deposit - see above mentioned earlier patent applications for further details. A further connection 5, to which ground water is preferably supplied, is connected via a filter 6, which makes use of active carbon, to the connection 3. The reactor vessel 2 is further provided with a feed connection 7 for supplying hot water (or another medium) of 60-160°C, preferably of 70-110°C, which is fed to standing pipes 8 of a heat exchanger and discharged via an outlet connection 9, at which outlet connection the water has for instance a temperature of roughly 30-120°C and preferably 40-80°C.

It is noted that the present invention is advantageously applied in treating ground water wherein addition of chemicals (such as alkali) is undesirable, or when the removal of formed microcrystals by means of slow sand post-filtration and/or coagulation/flocculation is not possible/ desirable.

When the ground water is heated in the above stated temperature path a treatment time of the water in the reactor (and in the bed) is preferably chosen of at least three minutes and more preferably about ten minutes in order to ensure that precipitation on the granular material has taken place.

In order that abrasion of calcium from the sand does not become too great a superficial flow speed of the water is preferably chosen of less than 50-100 metres per hour, at which flow speed the above stated treatment time is also realized.

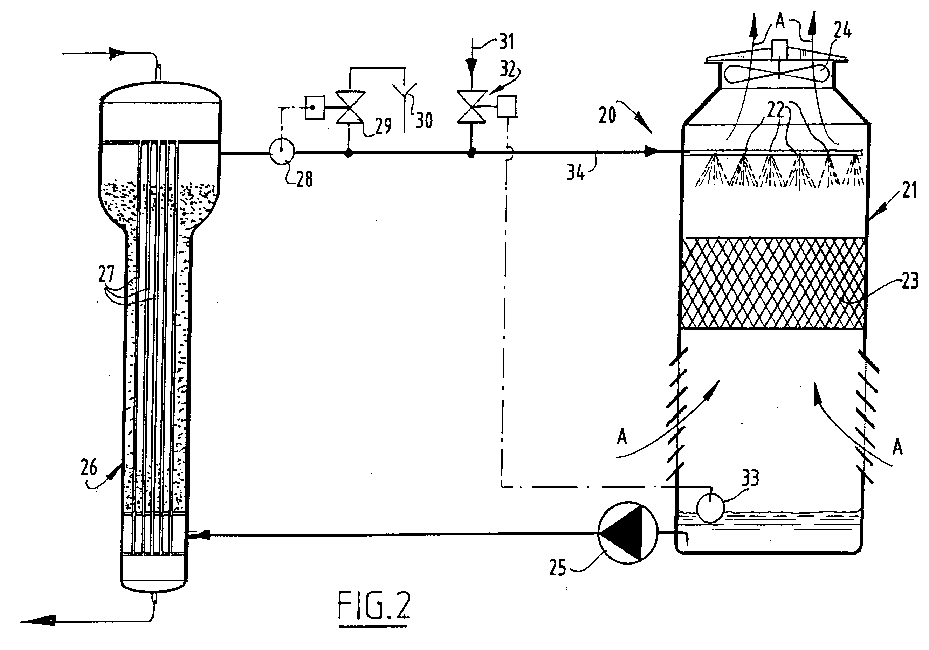

A cooling circuit 20 (fig. 2) comprising a cooling tower 21, in which cooling water is sprayed through nozzles 22 onto a package 23 and which water is at least partly evaporated by means of a forced air draught A induced by a fan 23. The evaporation causes a raising of salt concentrations e.g. calcium in first instance, but also Mg-Silicates and calcium phosphates at further concentrations, depending on the quality of the water used in the cooling circuit. At the bottom side of cooling tower 21 water is discharged by pump 25 to a fluidized bed-reactor 26, preferably one according to the apparatus as shown in fig. 1. At the upper side heated water HW is guided through pipes 27, which extend through the fluidized bed. At the bottom side of reactor 26 the cooled water CW of lower temperature is drained.

If the salt concentration in the cooling circuit becomes too high, which can be detected automatically by detector 28, such water is sluiced away through valve 29 to drain 30. Additional water is supplied from water supply 31 through valve 32 which can be controlled by a further detector 33, located near the bottom of cooling tower 21.

The supply of fresh water through valve 32 in line 34 to the nozzles 22 avoids clogging of such nozzles. The supply in this line 34 reduces super-saturation by mixing liquid water of lower temperature, which also reduces precipitation in the cooling tower itself.

Therefore the present invention provides for concentration of water to a factor 10 in the cooling tower, in relation to a factor 2-4 in conventional cooling circuits. This will reduce the amount of water used and the amount of used chemicals, such as alkali.

## Claims

1. A method for treating water, comprising the following steps:

    - feeding untreated water through a connection into a reactor vessel;
    - fluidizing a bed of granular material in the reactor vessel by the water flow;
    - precipitating calcium ($CaCO_3$) onto the granular material; and
    - discharging at least partially treated water through a connection of the reactor vessel,

    wherein, during treatment in the reactor vessel, the saturation index (SI) of the calcium is held below a predetermined limit value.

2. A method according to claim 1, wherein logarithm SI is less than 1.7 and preferably in the range of 0.5 - 0.7.

3. A method according to claim 1 or 2, wherein dissolved organic carbon (DOC) is filtered from the untreated water.

4. A method according claim 1, 2 or 3, wherein (ortho)phosphate is removed by supply of an iron compound or filtering through iron compounds.

5. A method according to any of claims 1-4, wherein the flowspeed of the water through the reactor is limited to a predetermined value.

6. An apparatus for treating water according to the method of any of the claims 1-5, comprising:

    - a reactor vessel provided with a connection for feeding untreated water and a connection for discharging at least partially treated water;
    - a bed of granular material in the reactor vessel that is fluidized by the water flow;
    - precipitating means for causing calcium ($CaCO_3$) to be participated onto the granular material;
    - limiting means for holding the saturation index (SI) of the calcium below a predetermined limit value; and
    - heating means for heating the water in the reactor.

7. An apparatus according to claim 6, wherein the heating means comprise standing pipes of a heat exchanger.

8. An apparatus according to claim 6 or 7, wherein the granular material is processed prior to introduction into the reactor such that this material has a great affinity for calcium.

9. A cooling circuit comprising:

    - a cooling tower; and
    - an apparatus according to any of claims 6, 7 or 8.

**Patentansprüche**

1. Verfahren zur Behandlung von Wasser mit den folgenden Schritten:

   - es wird unbehandeltes Wasser über einen Anschluß in ein Reaktorgefäß eingeleitet;

   - es wird ein Bett aus Granulatmaterial im Reaktorgefäß durch die Wasserströmung fluidisiert;

   - es wird Calcium ($CaCO_3$) auf dem Granulatmaterial ausgefällt; und

   - es wird wenigstens teilweise behandeltes Wasser über einen Anschluß im Reaktorgefäß abgelassen,

   wobei während der Behandlung im Reaktorgefäß der Sättigungsindex (SI) des Calciums unter einem vorbestimmten Grenzwert gehalten wird.

2. Verfahren nach Anspruch 1, bei welchem der logarithmische SI-Wert kleiner als 1,7 ist und vorzugsweise im Bereich zwischen 0,5 und 0,7 liegt.

3. Verfahren nach den Ansprüchen 1 oder 2, bei welchem gelöster organischer Kohlenstoff (DOC) aus dem unbehandelten Wasser abgefiltert wird.

4. Verfahren nach den Ansprüchen 1, 2 oder 3, bei welchem (Ortho)Phosphat durch Zusatz einer Eisenverbindung oder durch Filtration über Eisenverbindungen entfernt wird.

5. Verfahren nach einem der Ansprüche 1 bis 4, bei welchem die Strömungsgeschwindigkeit des Wassers durch den Reaktor auf einen vorbestimmten Wert begrenzt wird.

6. Vorrichtung zur Behandlung von Wasser entsprechend dem Verfahren nach einem der Ansprüche 1 bis 5, welche die folgenden Teile aufweist:

   - ein Reaktorgefäß, welches mit einem Anschluß zum Zuführen unbehandelten Wassers und einem Anschluß zur Abführung von wenigstens teilweise behandeltem Wasser versehen ist;

   - ein Wirbelbett aus Granulatmaterial im Reaktorgefäß, welches durch die Wasserströmung fluidisiert wird;

   - Ausfällmittel, die bewirken, daß Calcium ($CaCO_3$) auf dem Granulatmaterial ausgefällt wird;

   - Begrenzungsmittel, die den Sättigungsindex (SI) des Calciums unter einem vorbestimmten Wert halten; und

   - Erhitzungsmittel, um das Wasser im Reaktor aufzuheizen.

7. Vorrichtung nach Anspruch 6, bei welcher die Erhitzungsmittel Standrohre eines Wärmeaustauschers aufweisen.

8. Vorrichtung nach den Ansprüchen 6 oder 7, bei welcher das Granulatmaterial vor der Einführung in den Reaktor derart behandelt wird, daß dieses Material eine große Affinität gegenüber Calcium besitzt.

9. Kühlkreis mit den folgenden Merkmalen:

   - einem Kühlturm; und

   - einer Vorrichtung nach einem der Ansprüche 6, 7 oder 8.

**Revendications**

1. Procédé de traitement de l'eau, comprenant les étapes suivantes :

   - introduire de l'eau non traitée à travers une jonction dans une cuve à réaction ;
   - fluidiser un lit d'un matériau granulaire placé dans la cuve à réaction, sous l'effet de l'écoulement d'eau ;
   - précipiter du calcium ($CaCo_3$) sur le matériau granulaire ; et
   - rejeter l'eau au moins partiellement traitée à travers une jonction de la cuve à réaction,

   dans lequel, pendant le traitement dans la cuve à réaction, l'indice de saturation (SI) du calcium est maintenu inférieur à une valeur limite prédéterminée.

2. Procédé selon la revendication 1, dans lequel le logarithme SI est inférieur à 1,7 et de préférence compris entre 0,5 et 0,7.

3. Procédé selon la revendication 1 ou 2, dans lequel le carbone organique dissous (COD) est éliminé par filtration de l'eau non traité.

4. Procédé selon la revendication 1, 2 ou 3, dans lequel du phosphate/de l'orthophosphate est éliminé par introduction d'un composé du fer ou par filtration à travers des composés du fer.

5. Procédé selon l'une quelconque des revendications 1 à 4, dans lequel la vitesse d'écoulement de l'eau à travers le réacteur est limitée à une valeur prédéterminée.

6. Dispositif pour traiter de l'eau selon le procédé selon l'une quelconque des revendications 1 à 5, comprenant :

   - une cuve à réaction munie d'une jonction d'introduction d'eau non traitée et d'une jonction d'évacuation de l'eau au moins partiellement traitée ;
   - un lit de matière granulaire dans la cuve à réaction, qui est fluidisé par l'écoulement d'eau ;
   - des moyens de précipitation pour provoquer la précipitation du calcium ($CaCO_3$) sur la matière granulaire ; et
   - des moyens de limitation pour maintenir l'indice de saturation (SI) du calcium au-dessous d'une valeur limite prédéterminée ; et
   - des moyens chauffants pour chauffer l'eau dans le réacteur.

7. Dispositif selon la revendication 6, dans lequel les moyens chauffants comprennent des tuyaux droits d'un échangeur de chaleur.

8. Dispositif selon la revendication 6 ou 7, dans lequel le matériau granulaire est traité avant son introduction dans le réacteur, en sorte que ce matériau présente une plus grande affinité pour le calcium.

9. Circuit de refroidissement comprenant :

   - une tour de refroidissement ; et
   - un dispositif selon l'une quelconque des revendications 6, 7 ou 8.

FIG.1

FIG.2